# EUROPÄISCHE PATENTSCHRIFT

(11) **EP 3 277 457 B1**
(45) Veröffentlichungstag und Bekanntmachung des Hinweises auf die Patenterteilung: **24.07.2019**
(21) Anmeldenummer: 16711209.3
(22) Anmeldetag: 16.03.2016
(51) Int. Cl.: B23K 37/02, B23K 9/173, B23K 9/032, B23K 9/32

(54) **SCHWEISSANORDNUNG ZUM DAUERHAFTEN FÜGEN EINES ERSTEN ROHRFÖRMIGEN BAUTEILS MIT EINEM ZWEITEN BAUTEIL**
WELDING ASSEMBLY FOR PERMANENT JOINING OF A FIRST TUBULAR COMPONENT WITH A SECOND COMPONENT
ENSEMBLE DE SOUDAGE SERVANT À ASSEMBLER DE MANIÈRE DURABLE UN PREMIER ÉLÉMENT DE FORME TUBULAIRE À UN DEUXIÈME ÉLÉMENT

(30) Priorität: 02.04.2015 DE 102015206044
(43) Veröffentlichungstag der Anmeldung: 07.02.2018
(73) Patentinhaber: Fraunhofer-Gesellschaft zur Förderung der angewandten Forschung e.V., 80686 München (DE); Universität Rostock, 18055 Rostock (DE)
(72) Erfinder: WANNER, Martin Christoph, 18211 Nienhagen (DE); DRYBA, Steffen, 18198 Kritzmow (DE); WEIDEMANN, Björn, 20253 Hamburg (DE); HARMEL, André, 18059 Rostock (DE)
(86) Internationale Anmeldenummer: PCT/EP2016/055623
(87) Internationale Veröffentlichungsnummer: WO 2016/156039

(56) Entgegenhaltungen:
- EP-A1- 1 811 047
- DE-B3-102009 043 021
- JP-A- H0 647 537
- JP-A- S59 150 675
- JP-A- 2001 018 066
- JP-A- 2005 219 124
- US-A- 5 515 589

## Beschreibung

### Technisches Gebiet

Die Erfindung bezieht sich auf eine Schweißanordnung zum dauerhaften Fügen eines ersten rohrförmigen Bauteils mit einem zweiten Bauteil längs einer zwei- oder dreidimensionalen Verschneidungskurve, längs der sich beide Bauteile berühren, mit einer Befestigungsanordnung zum lösbar festen Fügen an einem der Verschneidungskurve abgewandten rohrförmigen Ende des ersten Bauteils, einer mittel- oder unmittelbar an der Befestigungsanordnung um eine dem ersten Bauteil zugeordneten Rohrlängsachse schwenkbar gelagerten Manipulatoreinheit mit einem frei positionierbaren Manipulatorende, sowie einem an dem frei positionierbaren Manipulatorende angebrachten Schweißwerkzeug.

### Stand der Technik

Der Ausbau erneuerbarer Energiequellen führt zu einem wachsenden Bedarf an Offshore-Windenergieanlagen, zu deren Befestigung am oder im Meeresboden Ressourcen schonende Gründungsstrukturen in Form so genannter Jackets, Tripiles oder Tripods erforderlich sind, die sich allesamt durch Baustahlrohr-Konstruktionen mit Rohrknoten auszeichnen, die stahlbauliche Verbindungselemente von sich kreuzenden Rohren darstellen. Aufgrund verschiedener Typen von Gründungsstrukturen kommen unterschiedliche Rohrknoten in X-, Y-, K- und doppel-K-Bauweise zum Einsatz. Innerhalb dieser Bauweise unterscheiden sich die Rohrknotenverbindungen in Anschlusswinkel, Positionierung der Rohrstutzen, Baustahlrohrdicken sowie auch Durchmesser, so dass eine sehr große Anzahl verschiedener Knotentypen auch innerhalb einer Gerüstkonstruktion zum Einsatz kommen kann. Die Verbindung zweier Baustahlrohre, zumeist handelt es sich hierbei um die Verbindung eines Rohrstutzens an ein im Durchmesser größer bemessenes Basisrohr, erfolgt aufgrund der hier relevanten Dimensionen durch Schweißen. Dabei sind die Nahtvorbereitung sowie ein möglichst genauer Zuschnitt beider miteinander zu fügenden Rohrbauteile längs der dreidimensionalen Verschneidungskurve, längs der sich beide Bauteile berühren, von zentraler Bedeutung für die Schweißnahtqualität sowie Maßhaltigkeit.

Sowohl die Nahtvorbereitung als auch der Schweißfügeprozess von Rohrknotenverbindungen erfolgt in den häufigsten Fällen aufgrund der großen Abmessungen und Massen der beteiligten Fügepartner manuell, wodurch die Fertigung langwierig, ineffizient und teuer ist. Problematisch für den Einsatz von Schweißautomaten für die Herstellung derartiger Rohrknoten ist die große Menge an unterschiedlichen Rohrverbindungen, die bisher nicht mit einer einzigen automatisierten Universalschweißanordnung bewältigt werden kann.

In diesem Zusammenhang offenbart die Druckschrift DE 33 13 230 A1 ein Verfahren sowie eine Vorrichtung zum automatischen Anschweißen eines Rohrstutzens an ein größeres Basisrohrelement, letzteres ist dazu drehbar gelagert. Nach Anheften des Rohrelementes an das Basisrohr wird am Rohrstutzen eine Befestigungsanordnung angebracht, an der drehbar um die Rohrlängsachse des Rohrstutzens eine Schweißarmanordnung angelenkt ist, die zusätzlich zur Drehbewegung um die Rohrlängsachse axial bidirektional auslenkbar ist, um so ein Schweißwerkzeug exakt längs der dreidimensionalen Verschneidungskurve verfahren zu können. Aufgrund der Ausmaße der bekannten, am Rohrstutzen anzubringenden Schweißanordnung eignet sich diese lediglich zum Fügen von Rohrstutzen an einem Basisrohrabschnitt mit jeweils orthogonal zueinander orientierten Rohrachsen.

Die bekannte Vorrichtung nutzt zum einen den Vorteil, dass durch die drehbare Lagerung des Basisrohrabschnittes der Schweißvorgang stets in so genannter "Wannenlage" erfolgt, wodurch eine größtmögliche Schweißgeschwindigkeit und eine sehr hohe Schweißqualität erzielt werden kann, gleichwohl besteht der Nachteil, dass das Handling der zu fügenden Rohrbauteile aufgrund deren Größe und Gewicht begrenzt ist, eingedenk der Tatsache, dass insbesondere beim Fertigen von Offshore-Plattformen Rohrknoten mit einem Gesamtgewicht von 30 Tonnen und mehr sowie Rohrlängen von typischerweise bis zu 10 Metern und Durchmessern in der Größenordnung von 1 bis 3 Metern handzuhaben sind. Darüber hinaus werfen Rohrknoten mit Rohrwinkelkonstellationen, bei denen die Rohrlängsachse des anzuschweißenden Rohrstutzens relativ zur Rohrlängsachse des Basisrohres einen Winkel kleiner 90°, vorzugsweise kleiner 45° einschließt, Raumprobleme dahingehend auf, dass ein freies Verdrehen des Schweißwerkzeuges um 360° um die Rohrlängsachse des anzuschweißenden Rohrstutzens aufgrund der radial ausladenden Bauweise nicht möglich ist.

Sehr ähnliche Schweißvorrichtungen zum Fügen zweier rohrförmiger Bauteile, deren Rohrlängsachsen jeweils orthogonal zueinander orientiert sind, sind in den folgenden Druckschriften offenbart: EP 0060382 A1, EP 1811047 A1, JP 60203370 A, DE 10 2009 043 021 B3, DE 30 05 153 A1 sowie EP 0133411 A1.

Die Druckschrift DE 10 2011 118 615 A1 beschreibt eine Vorrichtung zum Schweißen eines Rohrstutzens längs eines Basisrohrabschnittes, deren Rohrachsen einen spitzen Winkel einschließen. Zum Schweißen beider Rohrteile längs der dreidimensionalen Verschneidungskurve ist ein an einer Linearachse bidirektional auslenkbarer Schweißroboter angebracht, der jedoch nur einen Teilabschnitt der Verschneidungskurve zu bearbeiten vermag. Zum vollständigen Verschweißen sind wenigstens zwei, vorzugsweise drei derartiger Schweißroboter um die miteinander zu fügenden Rohrbauteile anzuordnen.

Die Druckschrift EP 2 311 595 A1 beschreibt ein Unterpulver-Schweißgerät zum Verbinden zweier Werkstücke längs einer gemeinsamen Verschneidungskurve, wobei das Schweißgerät samt der für den Schweißprozess erforderlichen Komponenten, wie Schweißdrahtzuführung, Steuergerät auf einer Plattform montiert sind, die gemeinsam mit dem Schweißwerkzeug um eine Achse drehbar angeordnet sind, um die das Schweißwerkzeug zum Schweißen längs der vollständigen Schweißnaht gedreht wird. Die Anordnung ist geeignet zum Schweißen zweier Rohrstücke, deren Rohrlängsachsen senkrecht zueinander orientiert sind.

Eine zur vorstehenden Schweißanordnung vergleichbare Schweißanordnung ist der Druckschrift EP 0 049 037 A1 zu entnehmen, mit der die Herstellung einer Schweißverbindung zweier Rohrstücke möglich ist, deren Rohrlängsachsen orthogonal zueinander orientiert sind. Die Schweißanordnung ist an ein kleineres Rohrstück, das vertikal zu einem im Durchmesser größeren Rohrstück orientiert ist, abnehmbar fest gefügt und vermag Drehungen um die Rohlängsachse auszuführen, während eine vertikal absenkbare Schweißdüse einen Spalt zwischen beiden Rohrstücken im Wege des Schweißprozesses zu schließen vermag. Auch in diesem Fall sind sämtliche für den Schweißprozeß erforderlichen Komponenten auf der drehbar angeordneten Schweißanordnung angeordnet.

Aus der Druckschrift JP 57195583 A ist eine Schweißanordnung zu entnehmen, zum Schweißen eines Rohrstutzens an ein Hauptrohr, das um eine Horizontalachse drehbar gelagert ist. Die Schweißanordnung ist an dem Rohrstutzen endseitig befestigt und weist ein drehbar um die Längsachse des Rohrstutzens geführtes Schweißwerkzeug auf, dessen Position längs der Schweißnaht stets vertikal über der sich ausbildenden Schweißlinse gehalten wird, während sich das Hauptrohr um dessen horizontal ausgerichtete Rohrlängsachse dreht.

Aus der Druckschrift JP 2005-219124 A ist eine Schweißanordnung entsprechend dem Oberbegriff des Anspruchs 1 bekannt.

### Darstellung der Erfindung

Der Erfindung liegt die Aufgabe zugrunde, eine Schweißanordnung zum dauerhaften Fügen eines ersten rohrförmigen Bauteils mit einem zweiten, vorzugsweise ebenfalls rohrförmigen Bauteil längs einer zwei- oder dreidimensionalen Verschneidungskurve, längs der sich beide Bauteile berühren, mit einer Befestigungsanordnung zum lösbar festen Fügen an einem der Verschneidungskurve abgewandten rohrförmigen Ende des ersten Bauteils, einer mittel- oder unmittelbar an der Befestigungsanordnung um eine dem ersten Bauteil zugeordneten Rohrlängsachse schwenkbar gelagerten Manipulatoreinheit mit einem frei positionierbaren Manipulatorende sowie einem an dem frei positionierbaren Manipulatorende angebrachten Schweißwerkzeug derart weiterzubilden, dass die Schweißanordnung möglichst flexibel, kompakt und leicht ausgebildet sein soll, um Schweißaufgaben insbesondere zur Herstellung von Rohrknoten vor Ort durchführen zu können, ohne dass die beteiligten Fügepartner einer gesonderten Lagerung bedürfen. Insbesondere soll es möglich sein, beliebige Rohrknotenkonstellationen zu schweißen, mit wenigstens einem Rohrstutzen, dessen Rohrlängsachse mit der Rohrlängsachse eines Basisrohrabschnittes einen spitzen Winkel einschließt von 45° und weniger. Die Schweißanordnung soll darüber hinaus die Möglichkeit eröffnen, wenigstens ein Schweißwerkzeug um wenigstens 360° um die Rohrlängsachse des Rohrstutzens zu verschwenken, vorzugsweise unendlich oft um die Rohrlängsachse zu verschwenken, um auf diese Weise zumindest eine vollständig durchgängige, homogene Schweißnaht längs der Verschneidungskurve ausbilden zu können und dies ohne die Gefahr einer Kollision mit umliegenden Rohrwandbereichen. Durch unendliche Drehungen des Schweißwerkzeuges um die Rohrlängsachse soll es zudem möglich sein, große Wandstärken mit bis zu mehreren Zentimetern Dicke und einem damit verbundenen großen Schweißnaht-Füllvolumen mit einander zu schweißen. Hierbei sollen durch beliebig häufiges Überfahren der Schweißnaht mehrere einzelne, sogenannte Schweißraupen das Schweißnaht-Füllvolumen vollständigen füllen. Ferner soll die Schweißanordnung ohne weiteren montagetechnischen Aufwand an Rohrstutzen lösbar fest anbringbar sein, deren Rohrdurchmesser sich jeweils unterscheiden.

Die Lösung der der Erfindung zugrunde liegenden Aufgabe ist im Anspruch 1 angegeben. Vorteilhafte Weiterbildungen sind Gegenstand der Unteransprüche sowie der weiteren Beschreibung unter Bezugnahme auf die Figuren zu entnehmen.

Lösungsgemäß zeichnet sich eine Schweißanordnung zum dauerhaften Fügen eines ersten rohrförmigen Bauteils mit einem zweiten Bauteil längs einer zwei- oder dreidimensionalen Verschneidungskurve, längs der sich beide Bauteile berühren, mit den Merkmalen des Oberbegriffes des Anspruches 1 derart aus, dass die Manipulatoreinheit eine 6-achsige offene kinematische Kette in Form eines vertikalen Knickarmroboters ist und an einem Ende des Tragwerks angebracht ist. Ferner ist ein Versorgungsmodul vorgesehen, an dem wenigstens eine der folgenden Komponenten angebracht ist: eine Steuereinheit, eine elektrische Energieversorgungseinheit, wenigstens ein Reservoir für den Schweißprozeß relevante Materialien, umfassend Schweißdraht und Prozessgas. Wenigstens eine der vorstehenden Komponente ist über eine Verbindungsleitung mit dem Schweißwerkzeug verbunden, wobei das Versorgungsmodul drehbar gelagert ist, so dass es zur Bewegung des Schweißwerkzeugs um die Rohrlängsachse simultane Drehbewegung ausführen kann, um unendlich viele Drehungen des Schweißwerkzeuges um die Rohrlängsachse zu ermöglichen. Das Versorgungsmodul ist an einer zur Schweißanordnung separat ausgebildeten Tragstruktur zumindest längs einer Ebene frei positionierbar angelenkt.

Unter dem Begriff "Manipulatoreinheit" ist eine kinematische Kette zu verstehen, die ein System aus starren Körpern vorsieht, die durch Gelenke verbunden sind. Die Gelenke können dabei unterschiedliche Freiheitsgrade haben. Die Gelenke können sowohl als Drehgelenke mit wenigstens einer Drehachse, als auch als Schiebe- oder Schubgelenke ausgebildet sein. Die kinematische Kette im Falle der Schweißanordnung ist als eine 6-achsige, offene kinematische Kette in Form eines vertikalen Knickarmroboters ausgebildet.

Die Schweißanordnung stützt sich mit ihrer Befestigungsanordnung ausschließlich am rohrförmigen ersten Bauteil ab. Hierzu wird das der Befestigungsanordnung zugeordnete Klemmmodul stirnseitig in das einseitig offen ausgebildete, erste rohrförmige Bauteil axial eingesetzt. Im Wege einer darauffolgenden radialen Spreizung des Klemmmoduls geht die Befestigungsanordnung mit der Rohrinnenwand eine axial feste und verdrehsichere Kraft- und Reibschlussverbindung ein. Das Klemmmodul tritt hierbei über radial auslenkbare Reibelemente mit der Rohrinnenwand des ersten rohrförmigen Bauteils in Wirkverbindung, wobei die radiale Ausstellung der einzelnen Reibelemente variabel vorgenommen werden kann, so dass je nach Ausgestaltung und Dimensionierung eines die Reibelemente radial austellenden, aktorisch angetriebenen Hebelmechanismus ein und das gleiche Klemmmodul zur Befestigung an rohrförmigen Bauteilen mit jeweils unterschiedlichen Rohrinnendurchmessern eingesetzt werden kann, die sich bspw. bis zu einem Meter voneinander unterscheiden können.

In einer bevorzugten Ausführungsform verfügt die Befestigungsanordnung über eine mechanische Energiespeichereinheit, die die seitens des aktorisch angetriebenen Hebelmechanismus erzeugte radial wirkende Klemmkraft derart unterstützt, so dass bei einer thermisch bedingten radialen Aufweitung des ersten rohrförmigen Bauteils, wie dies in Fällen eines lang andauernden Schweißprozesses der Fall sein kann, die Reibelemente entsprechend kraftbeaufschlagt radial nachgeführt werden, wodurch die radiale Klemmkraft aufrechterhalten wird und auf diese Weise stets ein sicherer Halt der Schweißanordnung am jeweils ersten rohrförmigen Bauteil gewährleistet ist.

Das Klemmmodul ist ferner mit einer Abstützplattform verbunden, die mittel- oder unmittelbar in Anlage an das axial stirnseitige, rohrförmige Ende des ersten Bauteils bringbar ist und für eine axiale Abstützung der Befestigungsanordnung an dem ersten Bauteil sorgt. Zudem dient die Abstützplattform zur Aufnahme des Trägerringmoduls, das gegenüber der Abstützplattform axialfest und drehbar um eine Drehachse gelagert ist, die im gefügten Zustand des Klemmmoduls innerhalb des ersten rohrförmigen Bauteils mit der Rohrlängsachse zusammenfällt.

Zur drehbaren Lagerung des Trägerringmoduls relativ zur Abstützplattform weist das Trägerringmodul vorzugsweise wenigstens einen Trägerring auf, der einen drehbar zum Trägerring angeordneten Ringteil besitzt, der axial und drehfest mit der Abstützplattform lösbar fest verbunden ist. Zur drehbeweglichen Auslenkung des wenigstens einen Trägerringes relativ zum fest mit der Abstützplattform verbundenen Ringteil dient ein Servomotor, der einerseits fest mit dem Trägerring verbunden ist und andererseits über einen Getriebemechanismus mit dem Ringteil in Eingriff steht.

Der wenigstens eine Trägerring des motorisch relativ zum Klemmmodul drehbar angeordneten Trägerringmoduls verfügt in vorteilhafter Weise über einen kreisförmig ausgebildeten peripheren Umfangsrand, längs dem wenigstens eine Haltevorrichtung angebracht ist, die mit einem linearen Tragwerk derart in Eingriff steht, so dass das lineare Tragwerk aktorisch angetrieben, relativ zur Haltevorrichtung längs einer Linearachse bidirektional auslenkbar ist. Im Falle eines in das erste rohrförmige Bauteil eingesetzten Klemmmoduls erstreckt sich die Linearachse des linearen Tragwerks parallel zur Rohrlängsachse des rohrförmig ausgebildeten ersten Bauteils, wobei das lineare Tragwerk einen möglichst minimalen radialen Abstand zur Außenwand des ersten rohrförmigen Bauteils einnimmt. Wie die weiteren Ausführungen zeigen werden, ist der aktorische Antrieb des linearen Tragwerkes durch einen motorisch angetriebenen Spindelmechanismus realisiert, der zur kontrollierten bidirektionalen Auslenkung des linearen Tragwerkes in Eingriff mit der am Trägermodul angebrachten Haltevorrichtung steht. Das lineare Tragwerk besteht vorzugsweise aus einer fachwerkartig ausgebildeten Versteifungskonstruktion, die über eine sehr hohe Steifigkeit und damit verbunden über eine sehr geringe statische Durchbiegung verfügt. Das lineare Tragwerk kann bis zu 4 Meter Länge aufweisen, an dessen einseitigem Ende die Manipulatoreinheit in Form einer kinematischen Kette, nämlich in Form eines 6-achsigen, vertikalen Knickarmroboters, zur weiteren Raumpositionierung des am freien kinematischen Kettenende angebrachten Schweißwerkzeuges angeordnet ist. Der räumlich kleinbauende Knickarmroboter weist ein Eigengewicht von unter 100 kg, vorzugsweise ca. 60 kg auf, und ist somit räumlich frei verschwenk- und positionierbar. Auf diese Weise lassen sich der Knickarmroboter sowie das an diesem angebrachte Schweißwerkzeug möglichst enganliegend an der Außenwand des Rohrstutzens vollständig um den Rohrstutzen verschwenken, so dass eine kontinuierliche Schweißnahtausbildung längs der Fügekontur ohne Kollision mit umgebenden Wandteilen möglich ist.

Vornehmlich aus Gründen der drehbeweglichen Lagerung des Schweißwerkzeuges um das fest innerhalb des Rohrstutzens gefügte Klemmmodul derart, so dass das Schweißwerkzeug mit einheitlicher Drehrichtung mehrfach um die Rohrachse des Rohrstutzens zur Ausbildung einer unterbrechungsfrei, vollständig umlaufenden Schweißnaht, die sich u.U. aus mehrlagigen Schweißlagen zusammensetzt, gedreht werden kann, gilt es für eine kontinuierliche Energie- und Materialversorgung für das Schweißwerkzeug und die Manipulatoreinheit zu sorgen. Eine bevorzugte Ausführungsform sieht hierzu ein Versorgungsmodul in Form einer konstruktiv eigenständigen Baueinheit vor. Das Versorgungsmodul verfügt hierzu über einen Modulträger, an dem sämtliche Versorgungseinheiten für das Schweißwerkzeug angebracht sind, bspw. eine Steuereinheit zur Aktivierung und Ansteuerung des Schweißwerkzeuges, eine elektrische Energieversorgungseinheit sowie wenigstens ein Reservoir für den Schweißprozeß relevante Materialien, wie bspw. Schweißdraht, Prozessgas etc..
Die einzelnen Versorgungseinheiten sind über entsprechende Verbindungsleitungen mit dem Schweißwerkzeug verbunden. Um zu vermeiden, dass drehbedingte Komplikationen längs der Verbindungsleitungen auftreten, gilt es die Versorgungseinheit synchron mit dem Schweißwerkzeug mitzudrehen.

In einer bevorzugten lösungsgemäßen Ausführungsvariante ist das Versorgungsmodul getrennt zur Schweißanordnung an einer separaten Tragstruktur drehbar gelagert. Die Tragstruktur überragt vorzugsweise die zu schweißenden Rohrteile, so dass das Versorgungsmodul räumlich verfahr- und drehbar an der Tragstruktur befestigt ist und räumlich bewegt werden kann. Vorzugsweise kann die Tragstruktur mit dem daran angebrachten Versorgungsmodul auch zur Montage sowie Demontage der Schweißanordnung an den Rohrstutzen genutzt werden.

Die lösungsgemäß ausgebildete Schweißanordnung ermöglicht in bevorzugter Weise das Zusammenfügen so genannter Rohrknoten, bei denen Rohrstutzen mit nahezu beliebigem Durchmesser an ein Basisrohr zu schweißen sind, wobei die Rohrstutzen unter nahezu beliebige Winkel relativ zur Rohrlängsachse des Basisrohres angeordnet sein können. Eine mögliche Problematik der Kollision zwischen der Schweißanordnung und dem Rohrstutzen kann ausgeschlossen werden, zumal die Schweißanordnung kompakt und kleinbauend realisierbar ist. Durch den modularen Aufbau der lösungsgemäßen Schweißanordnung können zwei, drei oder mehr lineare Tragwerke mit jeweils daran befestigten Manipulatoreinheiten und den daran angebrachten Schweißwerkzeugen am Trägerringmodul befestigt werden, wodurch die für ein gesamtheitliches Schweißen eines Rohrstutzen an einem Basisrohr erforderliche Schweißzeit erheblich reduziert werden kann.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Perspektivische Gesamtdarstellung der lösungsgemäß ausgebildeten Schweißanordnung an einem Rohrknoten,
- Fig. 2a, b: Anordnungen der Schweißanordnung innerhalb eines Rohrknotens mit a) kleinem Durchmesser und b) größerem Durchmesser,
- Fig. 3a, b: Darstellung des Klemmmechanismus in a) entspannter Stellung und b) verspannter Stellung mit der Rohrinnenwand,
- Fig. 4a, b, c: Detaildarstellungen zum Klemmmodul:
a) illustrierte perspektivische Schrägansicht auf die Unterseite der Abstützplattform
b) Teillängsschnittdarstellung durch die Abstützplattform des Klemmmoduls,
- Fig. 5a, b: Darstellungen des Klemmmoduls,
- Fig. 6: Ansicht des Trägerringmoduls,
- Fig. 7a-c: a) Darstellung des linearen Tragwerks, b) der Haltevorrichtung sowie c) Querschnittdarstellung durch Haltevorrichtung mit Tragwerk und
- Fig. 8: Schweißanordnung mit einem an einer Tragstruktur angebrachtem Versorgungsmodul.

### Wege zur Ausführung der Erfindung, gewerbliche Verwendbarkeit

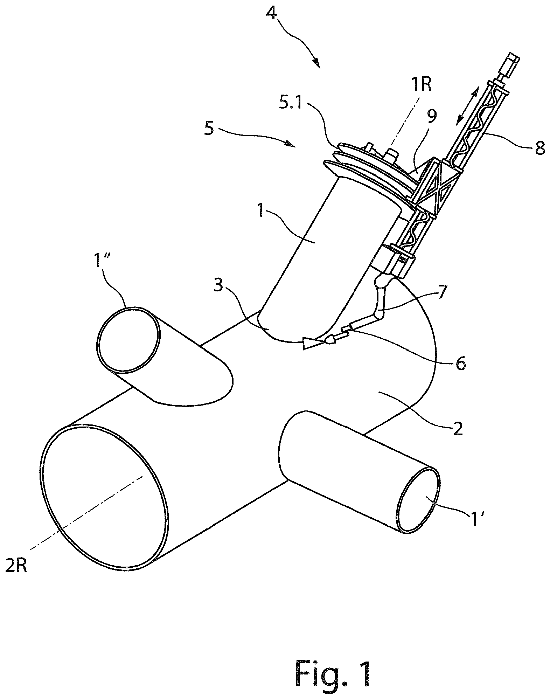

Figur 1 zeigt eine schematisierte Darstellung eines Rohrknotens mit einem als erstes rohrförmiges Bauteil 1 bezeichneten Rohrstutzen, der einseitig stirnseitig mit einem zweiten rohrförmigen Bauteil 2, im Weiteren Basisrohr, längs einer dreidimensionalen Verschneidungskurve 3 mittels Schweißtechnik verbunden ist bzw. wird. Das Basisrohr 2 weist gegenüber dem Rohrstutzen 1 einen größeren Rohrdurchmesser auf. Selbstverständlich ist es möglich, dass die Rohrdurchmesser von Rohrstutzen und Basisrohr gleich bemessen sind. Der in der Figur 1 illustrierte Rohrstutzen 1 weist eine Rohrlängsachse 1R auf, die mit der Rohrlängsachse 2R des Basisrohrs 2 einen Winkel kleiner 90°, vorzugsweise ≤ 45° einschließt.

Der schweißtechnische Fügevorgang, mit dem der Rohrstutzen 1 mit dem Basisrohr 2 verbunden wird, erfolgt mit Hilfe der ausschließlich am Rohrstutzen 1 befestigten Schweißanordnung 4, d.h. für den Schweißvorgang ist auch eine gesonderte Lagerung des Basisrohrs 2 nicht erforderlich. Die Schweißanordnung 4 stützt sich ausschließlich am Rohrstutzen 1 ab und ermöglicht die räumliche Positionierung bzw. Führung des Schweißwerkzeuges 6 um den Rohrstutzen 1 in räumlich unmittelbarer Nähe zur und längs der dreidimensionalen Verschneidungskurve 3. Hierzu ist das Schweißwerkzeug 6 am kinematischen Ende einer Manipulatoreinheit 7 angebracht, die vorzugsweise in Form eines gelenkig ausgebildeten Roboterarms, vorzugsweise eines 6-achsigen vertikalen Knickroboterarms, ausgebildet ist. Die Manipulatoreinheit 7 ermöglicht die räumliche Feinpositionierung des Schweißwerkzeuges 6 längs und um wenigstens sechs Achsen. Die Manipulatoreinheit 7 ihrerseits ist endseitig an einem linearen Tragwerk 8 befestigt, das über eine Haltevorrichtung 9 mit einer Befestigungsvorrichtung 5 verbunden ist. Das lineare Tragwerk 8 ist motorisch bidirektional längs seiner Längserstreckung relativ zur Haltevorrichtung 9 auslenkbar gelagert.

Die Befestigungsvorrichtung 5 sorgt für eine sichere lösbar feste Lagerung der gesamten Schweißanordnung ausschließlich am Rohrstutzen 1. Hierzu weist die Befestigungsanordnung 5 ein motorisch drehbar angetriebenes Trägerringmodul 5.1 auf, das eine vollständige Umfahrung des Schweißwerkzeuges 6 um die Rohrachse 1R des Rohrstutzens 1 und somit längs der vollständigen Erstreckung der dreidimensionalen Verschneidungskurve 3 ermöglicht. Das Trägerringmodul 5.1 ist mit einem nicht in Figur 1 ersichtlichen Klemmmodul 5.2 verbunden, das mittels eines Spreizmechanismus gegen die Rohrinnenwand des Rohrstutzens 1 für einen lösbar festen Sitz sorgt und die gesamte Schweißanordnung an Rohrstutzen 1 abstützt. Die lösungsgemäße Schweißanordnung 4 zeichnet sich durch ihren kompakten und eng am Rohrstutzen 1 anliegenden Aufbau aus, der eine räumliche Positionierung des Schweißwerkzeuges 6 selbst in räumlich beengten Fügebereichen ermöglicht. Nur der Vollständigkeit halber sei erwähnt, dass der in Figur 1 illustrierte Rohrknoten 2 über weitere Rohrstutzen 1', 1" verfügt, von denen der Rohrstutzen 1' eine orthogonale Achsausrichtung sowie der weitere Rohrstutzen 1" eine spitzwinklige Rohrachsenausrichtung relativ zur Rohrachse 2R besitzt. Die lösungsgemäße ausgebildete Schweißanordnung ermöglicht aufgrund ihres kompakten und modularen Aufbaus das schweißtechnische Fügen von nahezu beliebig geneigten und dimensionierten Rohrstutzen an jeweils ein als zweites, vorzugsweise rohrförmiges Bauteil bezeichneten Fügekörper.

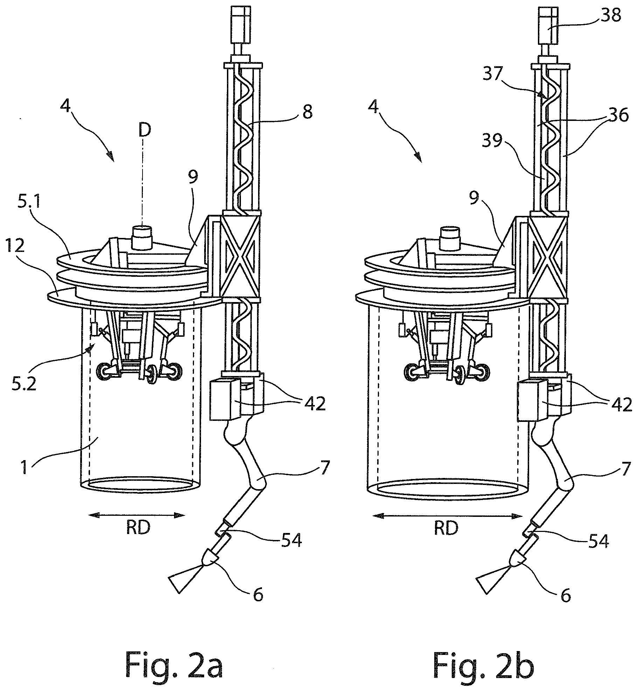

Anhand der Figuren 2 a und b ist die variable Einsetzbarkeit ein und derselben lösungsgemäßen Schweißanordnung 4 an Rohrstutzen 1 mit jeweils einem unterschiedlichen Rohrinnendurchmesser dargestellt. Ebenfalls kann aus den Illustrationen neben den bereits erläuterten Komponenten der Schweißanordnung 4, die, um Wiederholungen zu vermeiden, mit den vorstehend eingeführten Bezugszeichen versehen sind, das Klemmmodul 5.2 ersehen werden, das vermittels eines motorisch angetriebenen Hebelmechanismus eine axial- und drehfeste Fügung mit der Rohrinnenwand des jeweiligen Rohrstutzens 1 ermöglicht. Aufgrund der kontinuierlichen radialen Spreizung von am Klemmmodul 5.2 vorgesehenen Reibelementen 10, auf die im Weiteren näher eingegangen wird, kann das Klemmmodul 5.1 zur lösbar festen Fixierung in Rohrstutzen mit Rohrinnendurchmessern RD zwischen 1 m, siehe Figur 2a und 1,50 m, siehe Figur 2b, befestigt werden.

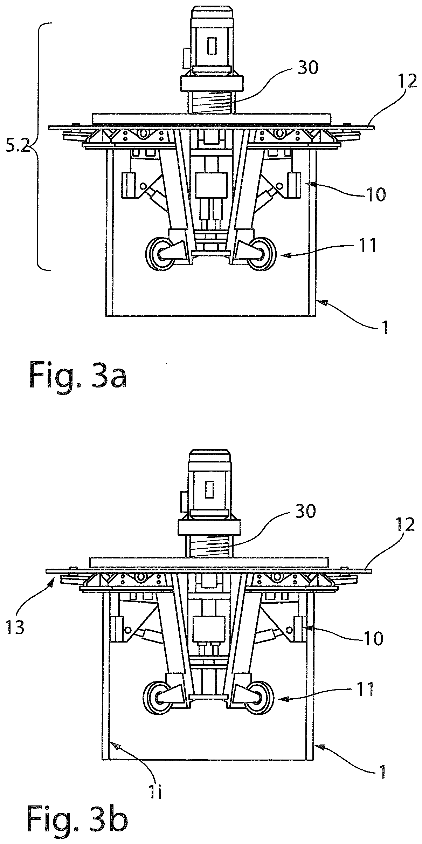

In Figur 3a ist das Klemmmodul in einer Teillängsschnittdarstellung in einem entspannten Zustand innerhalb eines Stützrohrs 1 illustriert. Figur 3b zeigt eine entsprechende Teillängsschnittdarstellung des Klemmmoduls 5.2 in gespanntem Zustand, bei dem Reibelemente 10 kraftbeaufschlagt im radialen Eingriff mit der Rohrinnenwand 1i gebracht sind.

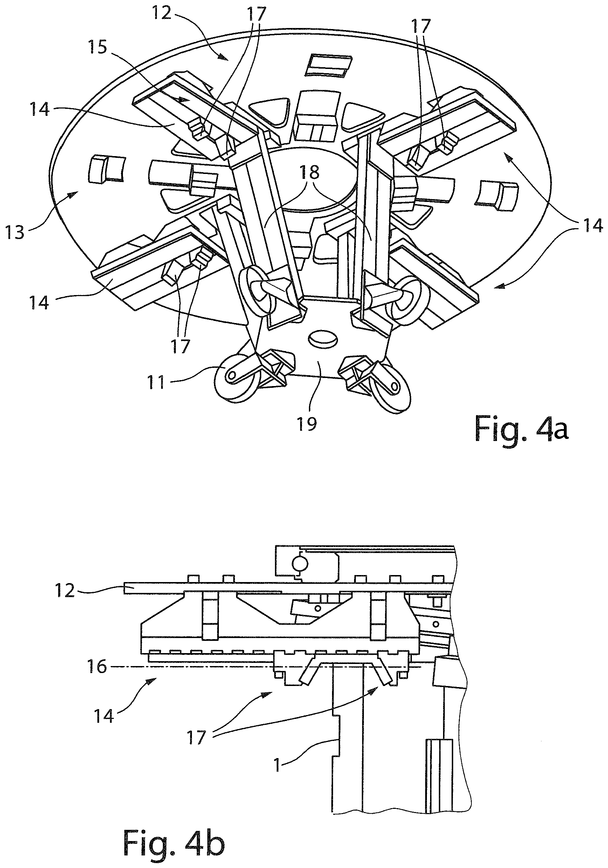

Das Klemmmodul 5.2 kann, wie aus den Figuren 3a und b ersichtlich, über das stirnseitige Ende des Rohrstutzens 1 in das Innere des Rohrstutzens 1 eingesetzt werden, wobei Führungsrollen 11 das Einfädeln des Klemmmoduls 5.2 in den Rohrstutzen 1 vereinfachen. Zu Zwecken der axialen Abstützung des Klemmmoduls 5.2 am stirnseitigen Ende des Rohrstutzens 1 weist das Klemmmodul 5.2 eine Abstützplattform 12 auf, die ringplattenförmig ausgebildet ist und eine dem Rohrstutzen 1 zugewandte Unterseite 13 aufweist, an der in Ringumfangsrichtung gleich verteilt Auflagerelemente 14 angebracht sind (siehe Figuren 4a, b), die jeweils eine radiale Erstreckung aufweisen, längs der zumindest abschnittsweise ein elektrisch isolierendes Element 15 angebracht ist, durch das eine thermische sowie insbesondere auch elektrische Isolierung des Klemmmoduls 5.2 zum Rohrstutzen 1 gewährleistet wird, um Schweißströme gegenüber dem Klemmmodul zu isolieren.

So kommt das stirnseitige Ende des Rohrstutzens 1 auf den elektrisch und vorzugsweise thermisch isolierenden Elementen 15 der Auflagerelemente 14 zu liegen, die die Anlageebene 16 der Abstützplattform 12 definieren. Die Auflagerelemente 14 verfügen jeweils über eine radiale Erstreckung, die derart dimensioniert ist, so dass die stirnseitigen Enden der Rohrstutzen mit jeweils unterschiedlich dimensionierten Rohrinnendurchmesser bzw. Außendurchmesser jeweils auf den Auflagerelementen 14 bei zentrischer Ausrichtung der ringplattenförmig ausgebildeten Abstützplattform 12 relativ zum Rohrstutzen zu liegen kommen. Radial längs jedes einzelnen Auflagerelementes 14 sind zu Zwecken einer leichteren Grobzentrierung der Abstützplattform 12 relativ zum stirnseitigen Ende des Rohrstutzens 1 Abstandhalter 17 vorgesehen, die entsprechend den Rohrdimensionen radial positioniert werden können.

Wie bereits erwähnt, sind an der Abstützplattform 12 axial zu dieser über Tragstreben 18 beabstandet, Führungsrollen 11 angebracht, die den Einfädelvorgang des im Weiteren zu erläuternden Klemmmoduls in den jeweiligen Rohrstutzen vereinfachen. Im Ausführungsbeispiel sind jeweils vier Führungsrollen 11 vorgesehen, die zur gegenseitigen Stabilisierung über eine gemeinsame Verbindungsplatte 19 verbunden sind, die einen fest vorgegebenen Abstand zur Abstützplattform 12 einnimmt.

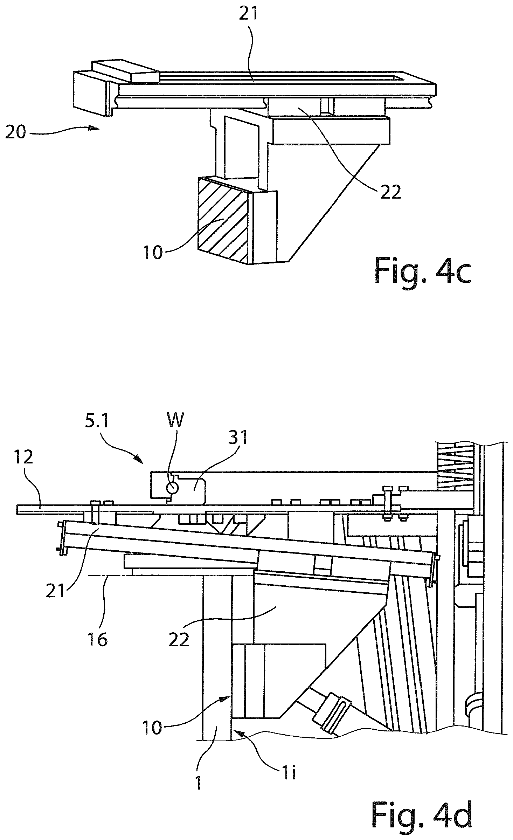

Wie aus Figur 4a ersichtlich, weist die ringplattenförmig ausgebildete Abstützplattform 12 eine mittige Öffnung auf, durch die, wie im Weiteren erläutert wird, ein motorisch angetriebener Spindelmechanismus hindurchragt, zum Antrieb eines die Reibelemente 10 radial auslenkenden Hebelmechanismus, siehe Fig. 4c, d. Der Außenringdurchmesser der Abstützplattform 12 ist jeweils größer bemessen als der Rohraußendurchmesser des Rohrstutzens 1, so dass die an der Unterseite 13 der Abstützplattform 12 montierten Auflagerelemente 14 ebenfalls eine größere radiale Erstreckung als der Außendurchmesser des jeweils zu fügenden Rohrstutzens besitzen.

Ferner ist jeweils in Umfangsrichtung der ringplattenförmig ausgebildeten Abstützplattform 12 zwischen zwei Auflagerelementen 14 eine sog. Reibelementanordnung 20 angebracht, die in Figur 4 a aus Gründen der Übersicht nicht dargestellt ist, jedoch in den Figuren 4c und d.
Die Reibelementanordnung 20 umfasst jeweils eine Führungsschiene 21, längs der ein Schlitten 22 bidirektional auslenkbar gelagert ist, an dem das Reibelement 10 montiert ist. Die Führungsschiene 21 erstreckt sich gleichsam den Auflagerelementen 14 radial zur Rohrstutzenachse und ist gegenüber der Anlageebene 16 geneigt an der Abstützplattform 12 montiert. Vorzugsweise ist die Führungsschiene 21 relativ zur Anlageebene 16 um einen Winkel α geneigt, für den gilt 0° < α ≤ 10°, vorzugsweise 5°.

Sämtliche Reibelementanordnungen 20 stehen jeweils mit einer als Hebelmechanismus ausgebildeten Aktoreinheit in Wirkverbindung, durch die die Reibelementanordnungen 20 aus einer ersten Position, in der die Reibelementanordnungen 20 jeweils einen Abstand zur Rohrinnenwand des Rohrstutzens einnehmen, in eine zweite Position überführbar sind, in der die Reibelementanordnungen jeweils einen gegenüber dem ersten Abstand größeren zweiten Abstand zur Achse aufweisen, so dass die Reibelemente 10 der jeweiligen Reibelementanordnungen 20 jeweils eine Kraft- und Reibschlussverbindung mit der Rohrinnenwand ausbilden. Durch die vorstehend erläuterte Neigung der Führungsschienen 21 relativ zur Anlageebene 16 erzeugen die mit der Rohrinnenwand in Kraft- und Reibschluss tretenden Reibelemente 10 zusätzlich zu der radial wirkenden Haltekraft eine das Klemmmodul 5.2 axial in Richtung des Rohrstutzens 1 hineinziehende, axial Zugkraft.

Die mit der Rohrinnenwand 1i in Kontakt tretenden Reibelemente 10 können zur Anpassung an den Innendurchmesser des jeweiligen Rohrstutzens 1 ausgetauscht werden. In vorteilhafter Weist sind die Reibelemente 10 aus dem gleichen isolierenden Werkstoff gefertigt, wie die isolierenden Elemente 15 längs der Auflageelemente 14.

In vorteilhafter Weise ist der Schlitten 22 derart dimensioniert und ausgebildet, so dass die Reibelemente 10, die mit der Rohrinnenwand 1i in Kontakt treten, einen gewissen axialen Abstand zur Führungsschiene 21 und somit auch einen axialen Abstand zum stirnseitigen offenen Ende des Rohrstutzens im gefügten Zustand besitzen.

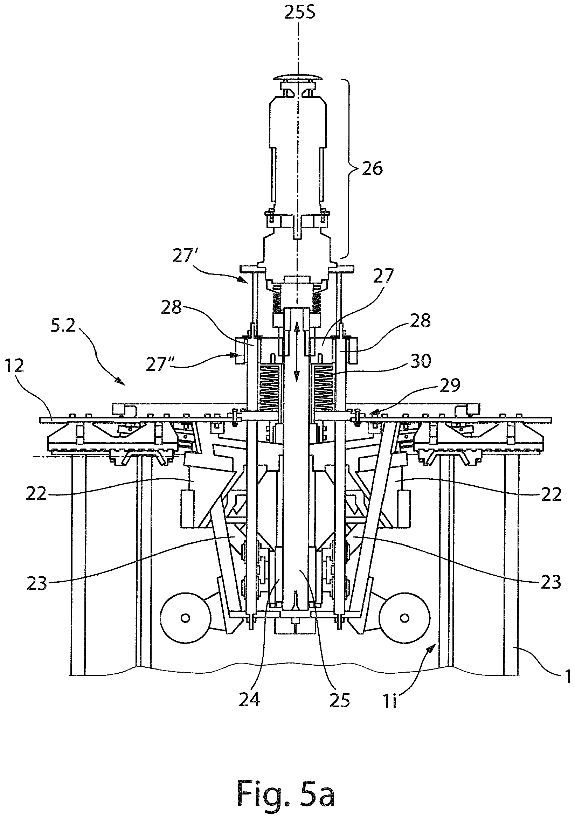

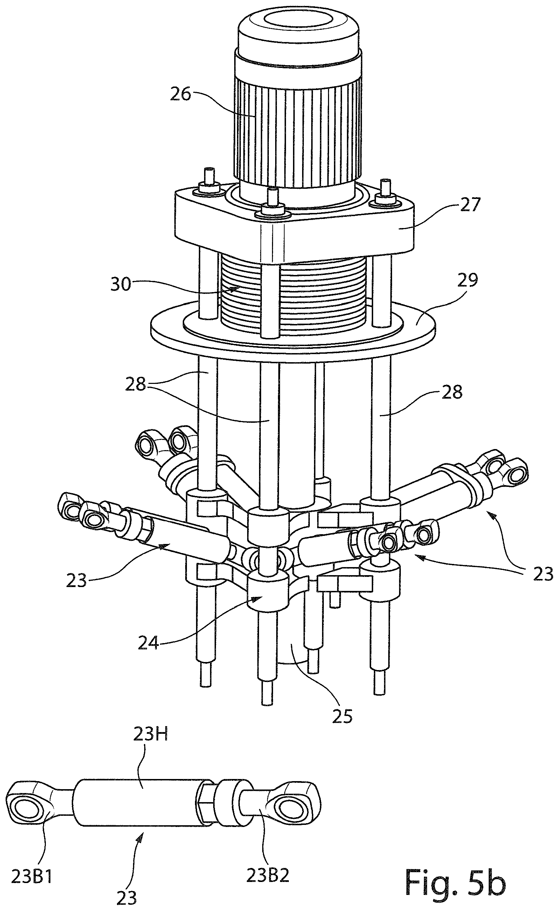

Zur radialen Auslenkung der Reibelementanordnungen 20 dient eine gemeinsame Aktoreinheit, der jeweils über einen Hebelmechanismus mit den einzelnen Reibelementanordnungen 20 in Wirkverbindung steht. Zur Erläuterung der als Linearaktor ausgebildeten, gemeinsamen Aktoreinheit sei auf die Figuren 5 a, b verwiesen. Figur 5a zeigt einen Längsschnitt durch ein in einem Rohrstutzen einsitzenden Klemmmodul 5.2. Figur 5b zeigt die gemeinsame Aktoreinheit mit dem Hebelmechanismus in Alleindarstellung. Die weiteren Beschreibungen beziehen sich auf beide Darstellungen gleichermaßen. So ist der Schlitten 22 jeder Reibelementanordnung 20 gelenkig mit einem Koppelglied 23 (siehe auch Figur 4c, 5b) einseitig verbunden, das andererseits an einer Spindelmutter 24 angelenkt ist, die längs einer Spindel 25 geführt ist. Die Spindel 25 ist an ihrem oberen Spindelende mit einem Antriebsmotor 26 verbunden. Der Motor 26 ist über einen Halterahmen 27' fest mit einer Motorplatte 27 verbunden, durch die vier Führungsstangen 28 jeweils gleitend gelagert hindurchragen. Die gleitende Lagerung jeder Führungsstange 28 ist jeweils durch eine in der Motorplatte 27 integrierte Kugelbüchse 27" realisiert. Die Führungsstangen 28 sind an ihren unteren Stangenenden mit der Verbindungsplatte 19 fest verbunden. Zwischen der Motorplatte 27 und einer fest mit der Abstützplattform 12 verbundenen Grundplatte 29 ist ein Federelement 30, vorzugsweise in Form eines Tellerfedernpaketes eingebracht, das den Motor 26 nebst Halterahmen 27' und Motorplatte 27 abstützt. Die Führungsstangen 28 durchragen die Grundplatte 29 ebenfalls gleitend.

Ausgehend von der in Figur 5a illustrierten Konstellation wird bei geeigneter Drehung der Spindel 25 die Spindelmutter 24 vertikal nach oben bewegt, wodurch die Schlitten 22 der Reibelementanordnungen 20 vermittels der Koppelglieder 23 radial nach außen bewegt werden, um in Eingriff mit der Rohrinnwand 1i zu gelangen. Die Länge der einzelnen Koppelglieder 23 ist vorzugsweise derart bemessen, dass im verspannten Zustand die Koppelglieder 23 mit der Spindellängsachse 25S einen Winkel, vorzugsweise zwischen 80° und 85° einschließen. Um diesen Winkel für verschiedene Rohrstutzeninnendurchmesser zu gewährleisten, können die Längen der einzelnen Koppelglieder 23 angepasst werden. In einer bevorzugten Ausführungsvariante zur Realisierung der Koppelglieder 23 bestehen diese, siehe Figur 5b untere Darstellung aus einer Hülse 23H, in deren Endbereiche jeweils entgegengesetzt orientierte Innengewinde eingebracht sind. In diese Innengewinde wird beidseitig jeweils ein Bolzenelement mit Auge 23B1, 23B2 eingeschraubt, dessen Einschraubtiefe jeweils die Gesamtlänge des Koppelgliedes 23 vorzugeben vermag.

Aufgrund der geneigten Anordnung der Führungsschienen 21 jeder einzelnen Reibelementanordnung 20 wird eine axial in Richtung des Rohrstutzens 1 hineinziehende Zugkraft generiert, sobald die Reibelemente 10 der Reibelementanordnungen 20 kraftbeaufschlagt gegen die Rohrinnenwand 1i gepresst werden. Diese Zugkraft vermag das Tellerfederpaket 30 zusätzlich zu der auf diesem lastenden Eigengewichtskraft des Motor 26 nebst Halterahmen 27' und Motorplatte 28 zu komprimieren. Auf diese Weise wird mechanische Spannenergie im Tellerfederpaket 30 zwischengespeichert. Da sich der jeweils zu fügende Rohrstutzen 1 während des Schweißvorganges aufgrund der Wärmeeinbringung thermisch ausdehnen kann, gilt es die Reibelementanordnungen 20 unter Beibehaltung der Klemmkraft radial entsprechend nachzuführen. Um zu vermeiden, dass hierzu der Spindelantrieb motorisch erneut aktiviert wird, gewährleistet die im Tellerfederpaket 30 zwischengespeicherte mechanische Spannenergie eine Kompensation der thermischen Rohrstutzenausdehnung durch kraftbeaufschlagtes Nachführen der Schlitten 22 gegen die Rohrstutzeninnenwand. Zur Aktivierung des Antriebmotors 26, der typischerweise nicht als Servomotor ausgebildet ist, werden Näherungs- oder Endschalter benutzt, um sicherzustellen, dass der Motor genauso weit verfährt, bis das Tellerfederpaket 30 im gewünschten Maße gespannt ist. Der Antriebsmotor bekommt also nach Auslösen des Endschalters ein Signal und wird daraufhin angehalten.
Im Falle der Ausbildung des Antriebmotors 26 als Servomotor kann auf die Endschalter verzichtet werden, um dennoch sicherzustellen, dass die Spindel 25 motorisch lagegeregelt angetrieben werden kann.

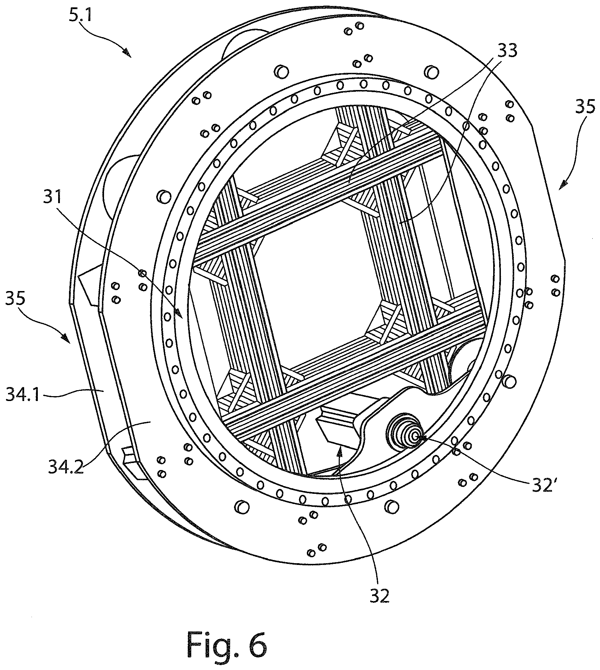

Anhand der Figuren 2a und 2b ist ersichtlich, dass das Trägerringmodul 5.1 an der Oberseite der Abstützplattform 12 montiert ist. Zur drehbaren Lagerung des Trägerringmoduls 5.1 relativ zur Abstützplattform 12 um eine mit der Rohrstützenlängsachse zusammenfallenden Drehachse D weist das Trägerringmodul 5.1 einen fest mit der Abstützplattform 12 verbundenen Ringteil 31 auf, an dem das Trägerringmodul 5.1, vorzugsweise über ein Wälzlager W drehbar gelagert ist, siehe auch Fig. 4d. Eine weitere diesbezügliche Darstellung ist in Figur 6 gezeigt, die eine perspektivische Ansicht des Trägerringmoduls 5.1 von unten zeigt. An der Ringinnenseite des Ringteils 31 ist eine nicht weiter dargestellte Innenverzahnung eingebracht, in die ein Antriebsrad 32' eines fest mit dem Trägerringmodul 5.1 verbundenen Servomotors 32 in Eingriff steht.

Das Trägerringmodul 5.1 weist zwei fest über eine Verstrebungsstruktur 33 verbundene Trägerringplatten 34.1 sowie 34.2 auf, an deren Umfangsrand jeweils zwei peripher abgeflachte Kontaktabschnitte 35 vorgesehen sind, die sich diametral am Umfangsrand beider Trägerringplatten 34.1, 34.2 gegenüberliegen und an denen jeweils eine Haltevorrichtung 9, nicht in Figur 6 dargestellt, siehe Fig. 2a, b, für die Anbringung jeweils eines linearen Tragwerkes 8 montiert ist. Durch Vorsehen zweier, am drehbar relativ zum Klemmmodul 5.2 gelagerten Trägerringmodul 5.1 angebrachter linearer Tragwerke 8 mit den damit verbundenen Schweißwerkzeugen, kann die Schweißaufgabe in signifikant kürzerer Zeit durchgeführt werden, als mit Hilfe jeweils eines einzelnen Schweißwerkzeuges.

Der Durchmesser des Trägerringmoduls 5.1 sollte in etwa dem Rohrstutzendurchmesser entsprechen, d. h. zumindest um ein nicht zu großes Maß überschreiten, um die radiale Ausdehnung über den Rohrstutzen möglichst gering zu halten, um so auch Rohrstutzenkonstellationen schweißen zu können, bei denen die Rohrstutzenlängsachse mit der Hauptrohrlängsachse einen Winkel kleiner 45° einschließt.

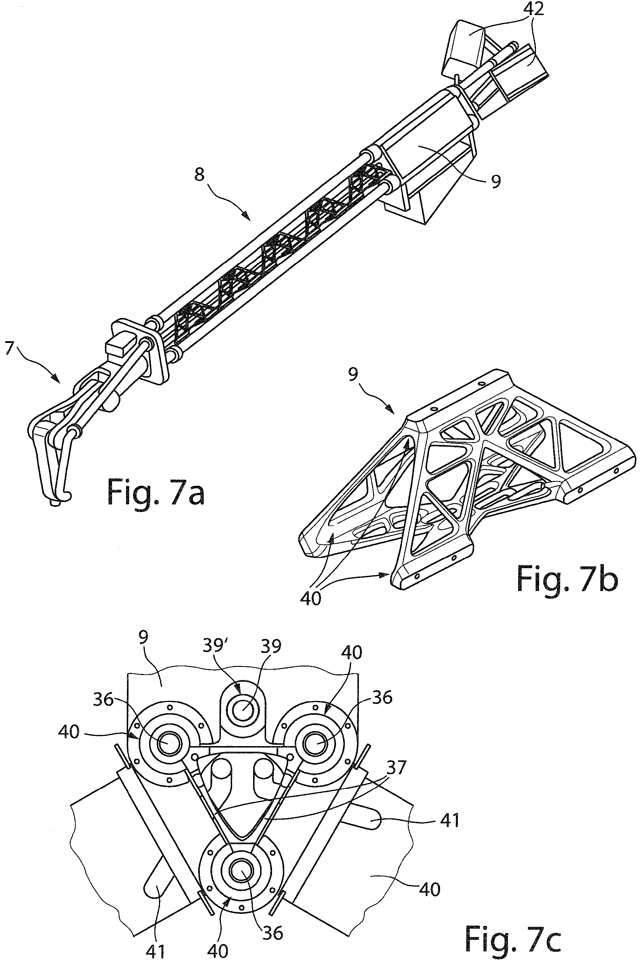

Das längs der Haltevorrichtung 9 bidirektional geführte lineare Tragwerk 8, siehe Fig. 2a, b sowie Fig. 7a, b, c setzt sich in einer vorteilhaften Ausführungsform aus drei parallel geführten Längsstreben 36 zusammen, die jeweils eine Länge von mehreren Metern, d. h. bis zu 3 bis 5 m besitzen können, siehe Figuren 2a, b, Fig. 7a.. Die Figur 7a zeigt eine Einzeldarstellung eines linearen Tragwerkes 8, Figur 7b zeigt eine Einzelbetrachtung einer Haltevorrichtung 9 und Figur 7c zeigt einen Querschnitt durch eine Haltevorrichtung 9 mit einem innengeführten linearen Tragwerk 8.

Die drei Längsstreben 36 des linearen Tragwerkes 8 sind über eine innenliegende Fachwerkstruktur 37 fest, bspw. mittels Klebung, miteinander verbunden und bilden somit eine biegesteife Tragwerkstruktur, die Belastungen im Wege überlagerter Vertikal- und Horizontalbewegungen ohne nennenswerte Eigenverformungen standzuhalten vermag. Ebenfalls verläuft parallel zu den Längsstreben 36 eine mit Hilfe eines Antriebsmotors 38 angetriebene Spindel 39, die in Eingriff mit einer Spindelmutter 39', siehe Figur 7c steht, die fest mit der Haltevorrichtung 9 verbunden ist. Die Längsstreben 36 sind gleitend längs zur Haltestruktur 9 geführt, so dass durch den erläuterten Spindelradantrieb das gesamte lineare Tragwerk 8 bidirektional verfahrbar ist, d. h. im Sinne der in Figur 2a und b dargestellten Situation angehoben oder abgesenkt werden kann. Hierzu verlaufen die drei Längsstreben 36, die zugleich als Führungsschienen dienen, durch halbgeöffnete Kugelbüchsen 40, die in der Haltevorrichtung 9 integriert sind, damit die versteifende Fachwerkstruktur 37 kollisionsfrei zur Haltevorrichtung 9 bewegt werden kann. Die Konstruktion baut sehr leicht und eröffnet zudem die Möglichkeit Kabel, Schweißdraht oder sonstige Versorgungsleitungen 41 durch die Versteifungsstruktur des linearen Tragwerkes 8 zu führen. Am unteren Ende, das dem Antriebsmotor 38 gegenüberliegt, ist die erwähnte Manipulatoreinheit 7 angebracht, die über am linearen Tragwerk 8 angebrachte Versorgungseinheiten 42 sowohl mit Energie als auch Material versorgt wird, das für den Schweißvorgang erforderlich ist. Im Falle des in Figur 2a, b illustrierten Ausführungsbeispiels sind die Versorgungseinheiten 42 am untere Ende des linearen Tragwerkes 8 angebracht, im Falle des in Figur 7a illustrierten Ausführungsbeispiels am oberen Ende des Tragwerkes 8. Die Manipulatoreinheit 7 ist vorzugsweise als sechsachsiger vertikaler Knickarmroboter ausgebildet, der das daran angebrachte Schweißwerkzeug 6 unter Nutzung geeignet vorgesehener Sensorik gegenüber der dreidimensionalen Verschneidungskurve 3 längs des Rohrstutzens fein positioniert. In vorteilhafter Weise ist am frei positionierbaren Manipulatorende eine Sensoreinheit 54 zur berührungslosen Erfassung von Form und/oder Größe eines längs der Verschneidungskurve bestehenden Zwischenraumes oder einer nutförmigen Ausnehmung, den oder die es gilt im Wege des Schweißens zu füllen. In vorteilhafter Weise ist die Sensoreinheit 54 als ein Linienschnittsensor ausgebildet, mit dem der reale Querschnitt der zu füllenden Schweißnaht vor dem Schweißen jeder Schweißlage vermessen wird. Auf Basis dieser Information erfolgt dann die Bahnplanung und wie die nächste Schweißlage in den entsprechenden Schweißnaht-Querschnitt gelegt wird.

Im Falle von Energie- und Materialaufwändigen Schweißprozessen, bei denen das Scheißwerkzeug vielfach um die Rohrstutzenlängsachse zur Ausbildung einer mehrlagigen Schweißraupe längs der Schweißnaht geführt wird, bedarf es einer kontinuierlichen externen Zuführung von Energie sowie Schweißmaterialien in die unmittelbar am linearen Tragwerk 8 angebrachten Versorgungseinheiten 42.

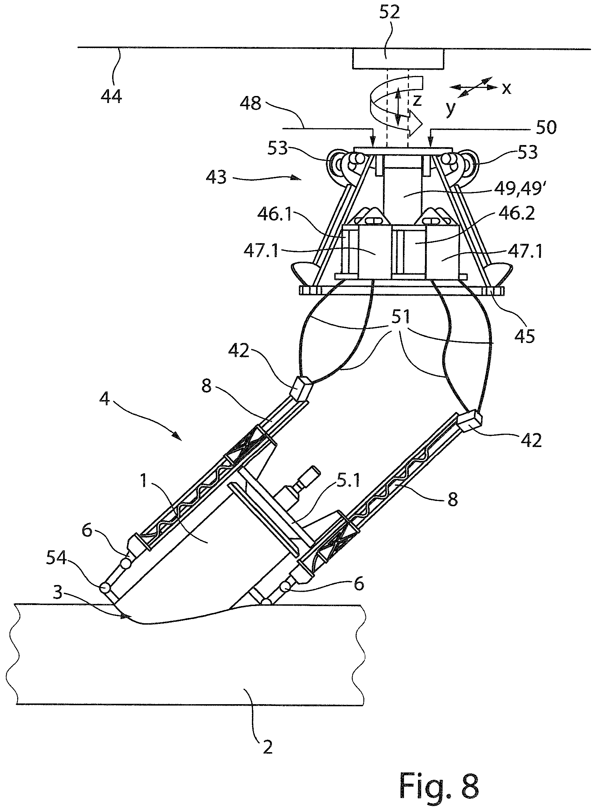

Hierzu dient eine vorzugsweise zur Schweißanordnung 4 separate Baueinheit in Form eines Versorgungsmoduls 43. Die Schweißanordnung 4 sowie das Versorgungsmodul 43 ist in Figur 8 schematisiert illustriert, in der die Schweißanordnung 4 an einen Rohrstutzen 1 stirnseitig befestigt ist, dessen Rohrlängsachse relativ zur Rohrlängsachse eines Basisrohrs 2 um 45° geneigt ist. Die Schweißanordnung 4 verfügt über zwei am Trägerringmodul 5.1 angebrachte Schweißwerkzeuge 6, die der dreidimensionalen Verschneidungskurve 3 zugewandt, jeweils endseitig an den linear beweglich, am Trägerringmodul 5.1 angelenkten, linearen Tragwerken 8 angebracht sind.

Die Versorgung der Schweißwerkzeuge 6 mit elektrischer Energie sowie insbesondere mit für den Schweißprozess relevanten Materialien, wie bspw. Schweißdraht sowie auch Schweißgas, erfolgt über das separat ausgebildete Versorgungsmodul 43, das an einer separaten Tragstruktur 44 räumlich weitgehend frei positionierbar angelenkt ist. Die Aufhängevorrichtung 52 für das Versorgungsmodul 43 an der Tragstruktur 44 ermöglicht sowohl eine vertikale (z-Achse) und horizontale (x-, y-Achse) Positionierung sowie auch eine Rotation des Versorgungsmoduls 43 um die Vertikalachse (z-Achse).

Das Versorgungsmodul 43 weist einen Modulträger 45 auf, an dem sämtliche, für den Schweißprozess relevante Logistikkomponenten untergebracht sind. Diese betreffen pro Schweißwerkzeug jeweils eine Steuereinheit 46.1, 46.2 einen Schweißdrahtspeicher mit entsprechender motorischer Drahtzuführung 47.1, 47.2. Die Energieversorgung des separaten Versorgungsmoduls, insbesondere der Steuereinheiten 46.1 sowie 46.2 erfolgt vorzugsweise über eine externe Kabelzuführung 48, die über eine zentral am Versorgungsmodul 43 angeordnete Schleifringkupplung 49 ankoppelt. Bedarfsweise ist eine weitere externe Zuführleitung 50 vorgesehen, über die Schweißgas dem Versorgungsmodul 43 zugeführt wird. Die Anbindung der Schweißgaszuführung 50 an das Versorgungsmodul 43 erfolgt ebenfalls über eine fluiddichte Schleifringkupplung 49'. Auf diese Weise können externe Energiequellen sowie auch Gasreservoirs, bspw. in Form von Gasflaschen, an leicht zugänglichen Stellen im Bereich des Rohrknotens bevorratet und entsprechend genutzt werden.

Zwischen dem Versorgungsmodul 43 und den Versorgungseinheiten 42 sind entsprechend flexibel ausgebildete Verbindungsleitungen 51 vorgesehen, über die letztlich die Schweißwerkzeuge mit Energie sowie auch den für den Schweißprozess erforderlichen Materialien versorgt werden.

Aufgrund der vermittels des Trägerringmoduls 5.1 drehbaren Anordnung der Schweißwerkzeuge 6 um die Rohrlängsachse des Rohrstutzens 1 ist es erforderlich das Versorgungsmodul 43 gleichförmig zur Drehbewegung der Schweißwerkzeuge 6 um die Rohrlängsachse mitzudrehen, um so zu verhindern, dass die Verbindungsleitungen 51 verdrillen und somit Schaden nehmen. Hierzu ist der Modulträger 45 des Versorgungsmoduls 43 in geeigneter Weise an der Tragstruktur 44, die bspw. galgenförmig oder in Art eines Drei- oder Vierbeins ausgebildet ist und die Schweißanordnung 4 samt den zu verschweißenden Rohrstutzen vertikal überragt, räumlich frei positionierbar aufgehängt und insbesondere um die Hochachse z drehbar gelagert.

Zusätzlich dient das Versorgungsmodul 43 vermittels des stabil und lasttragend ausgebildeten Modulträgers 45 als eine Art Kranelement, an das die Schweißanordnung 4 gesamtheitlich lösbarfest anbringbar ist. Mit Hilfe von an dem Modulträger 45 angebrachten, motorisch angetriebenen Umlenkrollen 53, um die Seilzüge laufen, kann die Schweißanordnung 4 zu Montagezwecken abgelassen und zu Demontagezwecken angehoben werden.

Durch den modularen Aufbau der lösungsgemäß ausgebildeten Schweißanordnung können unterschiedlich dimensionierte Rohrknotenkonstruktionen geschweißt werden. So ist es möglich Systembaugruppen der Schweißanordnung dimensionsangepasst an die jeweils zu lösende Schweißaufgabe auszutauschen und mit anderen Gruppen zu kombinieren. Bspw. können unterschiedlich dimensionierte Trägerringmodule 5.1 sowie auch unterschiedlich dimensionierte Klemmmodule 5.2 vorgesehen und miteinander kombiniert werden. Auch können unterschiedlich lange lineare Tragwerke 8 in die Haltevorrichtung 9 eingesetzt werden. Auch ist es möglich, unterschiedliche groß und stark ausgebildete Manipulatoreinheiten 7 vorzusehen, die in geeigneter Weise ein individuell gewähltes Schweißwerkzeug 6 zur Lösung der jeweiligen Schweißaufgabe räumlich fein positionieren können.

Mit der beschriebenen Schweißanordnung ist es somit möglich, Rohrstutzen beliebiger Durchmesser und beliebiger Winkel zwischen Basisrohr und Rohrstutzen zu schweißen. Die Problematik einer Kollision zwischen Schweißmanipulator und Rohrstutzen ist nicht oder kaum gegeben. Die neuartige Schweißanordnung ist wesentlich kostengünstiger als portalbasierte, zwangsläufig stationäre Schweißsysteme und darüber hinaus durch den modularen Aufbau hinsichtlich der Bearbeitungszeit einfach zu skalieren. So können bspw. zwei, drei oder mehr Schweißwerkzeuge über jeweilige lineare Träger am Trägerrandmodul befestigt werden, wodurch die erforderliche Schweißzeit signifikant reduziert werden kann. Ein weiterer wesentlicher Vorteil ist die Kompaktheit der Schweißanordnung. Während portalbasierte Lösungen an den Bearbeitungsort gebunden sind, kann die lösungsgemäß Schweißanordnung zum Rohrknoten gebracht und vor Ort geschweißt werden.

### Bezugszeichenliste

- 1: Erstes rohrförmiges Bauteil, Rohrstutzen
- 2: Zweites Bauteil, Basisrohr
- 3: Dreidimensionale Verschneidungskurve
- 4: Schweißanordnung
- 5: Befestigungsanordnung
- 5.1: Trägerringmodul
- 5.2: Klemmmodul
- 6: Schweißwerkzeug
- 7: Manipulatoreinheit
- 8: Lineares Tragwerk
- 9: Haltevorrichtung
- 10: Reibelement
- 11: Führungsrollen
- 12: Abstützplattform
- 13: Unterseite der Abstützplattform
- 14: Auflagerelement
- 15: Isolierendes Element
- 16: Anlageebene
- 17: Abstandshalter
- 18: Tragstreben
- 19: Verbindungsplatte
- 20: Reibelementanordnung
- 21: Führungsschiene
- 22: Schlitten
- 23: Koppelglied
- 23H: Hülse
- 23B1: Bolzen mit Auge
- 23B2: Bolzen mit Auge
- 24: Spindelmutter
- 25: Spindel
- 26: Antriebsmotor
- 27: Motorplatte
- 27': Halterahmen
- 27": Kugelbüchse
- 28: Führungsstangen
- 29: Grundplatte
- 30: Mechanischer Energiespeicher, Tellerfederpaket
- 31: Ringteil
- 32: Servomotor
- 32': Antriebsrad
- 33: Verstrebungsstruktur
- 34.1, 34.2: Trägerring
- 35: Kontaktabschnitt
- 36: Längsstreben
- 37: Fachwerkstruktur
- 38: Aktor
- 39: Spindel
- 39': Spindelmutter
- 40: Halbgeöffnete Kugelbüchse
- 41: Versorgungsleitung
- 42: Versorgungseinheit
- 43: Versorgungsmodul
- 44: Tragstruktur
- 45: Modulträger
- 46.1, 46.2: Steuereinheit
- 47.1, 47.2: Reservoir, Schweißdrahtzuführung
- 48: Externe Kabelzuführung
- 49: Schleifringanordnung
- 50: Schweißgaszuführung
- 51: Verbindungsleitungen
- 52: Aufhängevorrichtung
- 53: Umlenkrolle
- 54: Sensoreinheit
- W: Wälzlager
- 1i: Rohrinnenwand
- 1R: Rohrlängsachse
- D: Drehachse
- RD: Rohrstutzendurchmesser

## Patentansprüche

1. Schweißanordnung zum dauerhaften Fügen eines ersten rohrförmigen Bauteils (1) mit einem zweiten Bauteil (2) längs einer zwei- oder dreidimensionalen Verschneidungskurve (3), längs der sich beide Bauteile (1, 2) berühren, mit einer Befestigungsanordnung (5) zum lösbar festen Fügen an einem der Verschneidungskurve (3) abgewandten rohrförmigen Ende des ersten Bauteils, einer mittel- oder unmittelbar an der Befestigungsanordnung (5) um eine dem ersten Bauteil (1) zugeordneten Rohrlängsachse (1R) schwenkbar gelagerten Manipulatoreinheit (7) mit einem frei positionierbaren Manipulatorende, sowie einem an dem frei positionierbaren Manipulatorende angebrachten Schweißwerkzeug (6), wobei die Befestigungsanordnung (5) ein stirnseitig axial in das rohrförmige Ende des ersten Bauteils (1) zumindest teilweise einsetzbares Klemmmodul (5.2), das zum lösbar festen Fügen an eine dem ersten rohrförmigen Bauteil zugeordneten Rohrinnenwand (1i) ausgebildet ist, sowie ein drehbar an das Klemmmodul (5.2) angebrachtes Trägerringmodul (5.1) umfasst, das im gefügten Zustand des Klemmmoduls (5.2) das rohrförmige Ende des ersten Bauteils (1) axial überragt und mit einem Servomotor (32) zum Drehantrieb des Trägerringmoduls (5.1) um die Rohrlängsachse (1R) derart in Wirkverbindung steht, so dass das Trägerringmodul (5.1) unendlich um die Rohrlängsachse (1R) drehbar gelagert ist, und
wobei an dem Trägerringmodul (5.1) wenigstens ein lineares Tragwerk (8) angebracht ist, das vermittels eines Aktors (38) parallel zur Rohrlängsachse (1R) bidirektional auslenkbar gelagert ist, wobei die Manipulatoreinheit (7) eine 6-achsige offene kinematische Kette in Form eines vertikalen Knickarmroboters ist und an einem Ende des Tragwerks (8) angebracht ist,
dass ein Versorgungsmodul (43) vorgesehen ist, an dem wenigstens eine der folgenden Komponenten angebracht ist:
eine Steuereinheit (46.1, 46.2) eine elektrische Energieversorgungseinheit, wenigstens ein Reservoir (47.1, 47.2) für den Schweißprozeß relevante Materialien, umfassend Schweißdraht und Prozessgas,
dass die wenigstens eine Komponente über eine Verbindungsleitung (51) mit dem Schweißwerkzeug (6) verbunden ist,
dass das Versorgungsmodul (43) drehbar gelagert ist, zur Ausübung einer zur Bewegung des Schweißwerkzeugs (6) um die Rohrlängsachse simultanen Drehbewegung, die unendliche Drehungen des Schweißwerkzeuges (6) um die Rohrlängsachse ermöglicht, **dadurch gekennzeichnet, dass**
das Versorgungsmodul (43) an einer zur Schweißanordnung separat ausgebildeten Tragstruktur (44) zumindest längs einer Ebene frei positionierbar angelenkt ist.

2. Schweißanordnung nach Anspruch 1,
**dadurch gekennzeichnet, dass** das Klemmmodul (5.2) eine Abstützplattform (12) aufweist, zur mittel- oder unmittelbaren Anlage an das axial stirnseitige, rohrförmige Ende des ersten Bauteils (1), längs einer der Abstützplattform (12) zugeordneten Anlageebene (16).

3. Schweißanordnung nach Anspruch 2,
**dadurch gekennzeichnet, dass** mittel- oder unmittelbar an der Abstützplattform (12) wenigstens drei Reibelementanordnungen (20) angeordnet sind, die jeweils zumindest radial beweglich zu einer orthogonal zur Anlageebene (16) orientierten Achse (A), die im gefügten Zustand des Klemmmoduls (5.2) mit der Rohrlängsachse (1R) des ersten Bauteils (1) zusammenfällt, und um diese Achse (A) gleichverteilt angeordnet sind und die aktorisch aus einer ersten Position, in der die Reibelementanordnungen (20) jeweils einen ersten radialen Abstand zu der Achse (A) aufweisen, in eine zweite Position überführbar sind, in der die Reibelementanordnungen (20) jeweils einen gegenüber dem ersten Abstand größeren zweiten Abstand zur Achse (A) aufweisen, so dass die Reibelementanordnungen (20) jeweils eine Kraft- und Reibschlußverbindung mit der Rohrinnenwand (1i) ausbilden.

4. Schweißanordnung nach Anspruch 2 oder 3,
**dadurch gekennzeichnet, dass** die Abstützplattform (12) eine dem ersten Bauteil (1) zuwendbare Unterseite aufweist, an der wenigstens drei Auflagerelemente (14) gleichverteilt um die Achse (A) angeordnet sind, die jeweils eine radiale Erstreckung aufweisen, längs der zumindest abschnittsweise ein elektrisch isolierendes Element (15) angebracht ist, und
dass die den wenigstens drei Auflagerelementen (14) zugeordneten elektrisch isolierenden Elemente (15) die Anlageebene (16) aufspannen.

5. Schweißanordnung nach Anspruch 3 oder 4,
**dadurch gekennzeichnet, dass** die wenigstens drei Reibelementanordnungen (20) jeweils eine mittel- oder unmittelbar an der Abstützplattform (12) angebrachte, lineare Führungsschiene (21) aufweisen, längs der jeweils ein Schlitten (22) mit einem mit der Rohrinnenwand (1i) in Eingriff bringbaren Reibelement (10) bidirektional auslenkbar gelagert ist und
dass die Schlitten (22) der wenigstens drei Reibelementanordnungen (20) jeweils über ein Koppelglied (23) mit einer gemeinsamen Aktoreinheit in Wirkverbindung stehen, der sich an der Abstützplattform (12) abstützt.

6. Schweißanordnung nach Anspruch 5,
**dadurch gekennzeichnet, dass** die Führungsschienen (21) der Reibelementanordnungen (20) in axialer Projektion auf die Abstützplattform (12) radial zu der Achse (A) orientiert und gegenüber der Anlageebene (16) derart geneigt angeordnet sind, dass im gefügten Zustand des Klemmmoduls (5.2) zwischen den Reibelementen (10) und der Rohrinnenwand (1i) sowohl eine das Klemmmodul 5.2) axialfest fixierende, radial wirkende Haltekraft sowie eine das Klemmmodul (5.2) axial in Richtung des ersten Bauteils (1) ziehende, axial wirkende Zugkraft wirken.

7. Schweißanordnung nach Anspruch 6,
**dadurch gekennzeichnet, dass** die Führungsschienen (21) jeweils um einen Winkel α gegenüber der Anlageebene geneigt sind, mit 0° < α ≤ 10°.

8. Schweißanordnung nach einem der Ansprüche 5 bis 7,
**dadurch gekennzeichnet, dass** die gemeinsame Aktoreinheit ein Linearaktor ist, mit einer Aktorwirkrichtung, die längs der Achse (A) orientiert ist und längs der ein bidirektional auslenkbares Stellglied (24) vorgesehen ist, das mit den Koppelgliedern (23) der Reibelementanordnungen (20) in Wirkverbindung steht.

9. Schweißanordnung nach Anspruch 6 und 8,
**dadurch gekennzeichnet, dass** längs der Aktorwirkrichtung eine mechanische Energiespeichereinheit (30) mit dem Linearaktor in Wirkverbindung steht, die zumindest eine die das Klemmmodul (5.2) axial in Richtung des ersten Bauteils (1) ziehende, axial wirkende Zugkraft unterstützende Kraft zu entfalten vermag.

10. Schweißanordnung nach 8 oder 9,
**dadurch gekennzeichnet, dass** der Linearaktor einen Antriebsmotor (26) aufweist, der über die mechanische Energiespeichereinheit (30) mit der Abstützplattform (12) in Wirkverbindung steht, und
dass der Antriebsmotor (26) mit einer längs der Achse (A) orientierten Spindel (25) verbunden ist, die mit einer Spindelmutter (24) in Eingriff steht, die mit den Koppelgliedern (23) der wenigstens drei Reibelementanordnungen (20) verbunden ist.

11. Schweißanordnung nach Anspruch 10,
**dadurch gekennzeichnet, dass** die mechanische Energiespeichereinheit (30) eine Federanordnung ist, die zwischen dem Antriebsmotor (26) und der Abstützplattform (12) angeordnet ist, und
dass der Antriebsmotor (26) axialbeweglich relativ zur Abstützplattform (12) gelagert ist, so dass im gefügten Zustand des Klemmmoduls (5.2) die Federanordnung (30) eine in Aktorwirkrichtung orientierte Spannkraft entfaltet.

12. Schweißanordnung nach einem der Ansprüche 2 bis 11,
**dadurch gekennzeichnet, dass** an der Abstützplattform (12) eine das Klemmmodul (5.2) axial überragende Tragwerkstruktur angeordnet ist, an deren der Abstützplattform (12) gegenüberliegenden Tragwerkstrukturende wenigstens drei Führungsrollen (11) angebracht sind, die ein sicheres Einführen des Klemmmoduls (5.2) in das erste rohrförmige Bauteil (1) unterstützen.

13. Schweißanordnung nach einem der Ansprüche 2 bis 12,
**dadurch gekennzeichnet, dass** das Trägerringmodul (5.1) wenigstens einen mit der Abstützplattform (12) um die Achse (A) drehfest verbundenen Trägerring (34.2) aufweist, an dessen Ringinnenseite ein relativ zum Trägerring (34.2) drehbar gelagerter Innenring (31) vorgesehen ist, der mittel- oder unmittelbar mit dem, fest am Trägerring (34.2) vorgesehenen Servomotor (32) in Eingriff steht.

14. Schweißanordnung nach einem der Ansprüche 1 bis 13,
**dadurch gekennzeichnet, dass** das wenigstens eine lineare Tragwerk (8) radial aussen am Trägerringmodul (5.1) und mit diesem gemeinsam um die Rohrlängsachse (1R) drehbar angebracht ist.

15. Schweißanordnung nach einem der Ansprüche 1 bis 147,
**dadurch gekennzeichnet, dass** an dem frei positionierbaren Manipulatorende der Manipulatoreinheit (7) eine Sensoreinheit (54) zur berührungslosen Erfassung von Form und/oder Größe eines längs der Verschneidungskurve bestehenden Zwischenraumes oder einer nutförmigen Ausnehmung vorgesehen ist, den oder die es gilt im Wege des Schweißens zu füllen.

16. Schweißanordnung nach einem der Ansprüche 1 bis 15,
**dadurch gekennzeichnet, dass** das zur Schweißanordnung separate Versorgungsmodul über eine Aufhängevorrichtung an der separaten Tragstruktur derart angelenkt ist, dass sowohl eine vertikale und horizontale Positionierung sowie auch eine Rotation des Versorgungsmoduls um die Vertikalachse möglich ist.

17. Schweißanordnung nach einem der Ansprüche 1 bis 16,
**dadurch gekennzeichnet, dass** zur Energieversorgung am zur Schweißanordnung separaten Versorgungsmodul eine Schleifringkupplung vorgesehen ist, an der eine externe Kabelzuführung ankoppelt.

18. Schweißanordnung nach Anspruch 17,
**dadurch gekennzeichnet, dass** am zur Schweißanordnung separaten Versorgungsmodul eine fluiddichte Schleifringkupplung vorgesehen ist, an der eine externe Schweißgaszuführung ankoppelt.

## Claims

1. A welding assembly for permanent joining of a first tubular component (1) with a second component (2) along a two- or three-dimensional intersection curve (3), along which both components (1, 2) contact, comprising a securing assembly (5) for detachably securely joining on a tubular end of the first component facing away from the intersection curve (3), a manipulator unit (7) mounted indirectly or directly on the securing assembly (5) such that it can pivot about a tube longitudinal axis (1R) assigned to the first component (1), said manipulator unit having a freely positionable manipulator end, and a welding tool (6) attached to the freely positionable manipulator end, wherein the securing assembly (5) comprises a clamping module (5.2) that can at least partially be introduced into the tubular end of the first component (1) on the end side and in an axial manner, which clamping module is designed for detachably securely joining onto a tube inner wall (1i) assigned to the first tubular component, as well as a carrier ring module (5.1) which is rotatably attached to the clamping module (5.2), which axially extends beyond the tubular end of the first component (1) in the joined state of the clamping module (5.2), and which is in operative connection with a servomotor (32) for the rotary driving of the carrier ring module (5.1) about the tube longitudinal axis (1R) in such a way that the carrier ring module (5.1) is mounted such that it can rotate continuously about the tube longitudinal axis (1R), and wherein at least one linear frame (8) is attached to the carrier ring module (5.1), which frame is mounted such that it can be moved bidirectionally and parallel to the tube longitudinal axis (1R) by means of an actuator (38), wherein
the manipulator unit (7) is a 6-axis open kinematic chain in the form of a vertical articulated robot and is attached to one end of the frame (8),
a supply module (43) is provided to which at least one of the following components is attached:
a control unit (46.1, 46.2), an electrical energy supply unit, at least one reservoir (47.1, 47.2) for the material relating to the welding process, comprising welding wire and process gas,
the at least one component is connected to the welding tool (6) via a connection line (51),
the supply module (43) is rotatably mounted for performing a rotational movement at the same time as the movement of the welding tool (6) about the tube longitudinal axis, which permits infinite rotations of the welding tool (6) about the tube longitudinal axis, **characterised in that**
the supply module (43) is connected in articulated manner so as to be freely positionable along at least one plane to a support structure (44) that is constructed separately from the welding assembly.

2. The welding assembly according to claim 1,
**characterised in that** the clamping module (5.2) has a support platform (12) for directly or indirectly bearing on the axially frontal tubular end of the first component (1) along a bearing plane (16) assigned to the support platform (12).

3. The welding assembly according to claim 2,
**characterised in that** at least three friction element assemblies (20) are arranged directly or indirectly on the support platform (12), each of which is movable at least radially with respect to an axis (A) orientated orthogonally to the bearing plane (16) which coincides with the tube longitudinal axis (1R) of the first component (1) when the clamping module (5.2) is in the joined state, and which are arranged equidistantly around said axis (A), and which can be shifted by means of an actuator from a first position, in which the friction element assemblies (20) are each at a first radial distance from the axis (A), to a second position, in which the friction element assemblies (20) are each at second distance from said axis (A) which is greater than the first distance, so that the friction element assemblies (20) each form a non-positive and frictional locking connection with the tube inner wall (1i).

4. The welding assembly according to claim 2 or 3,
**characterised in that** the support platform (12) has a underside that can be turned to face the first component (1), and on which at least three cushioning elements (14) are arranged equidistantly about the axis (A), each of which has a radial extension along at least sections of which an electrically insulating element (15) is attached, and
the electrically insulating elements (15) assigned to the at least three cushioning elements (14) stretch the bearing plane (16).

5. The welding assembly according to claim 3 or 4,
**characterised in that** the at least three friction element assemblies (20) each have a linear guide rail (21) attached directly or indirectly to the support platform (12), along which rail at least one carriage (22) having a friction element (10) that can be brought into engagement with tube inner wall (1i) is mounted so as to be displaceable bidirectionally, and
the carriages (22) of the at least three friction element assemblies (20) are each in operative connection via a coupling link (23) with a common actuator unit that is braced on the support platform (12).

6. The welding assembly according to claim 5,
**characterised in that** the guide rails (21) of the friction element assemblies (20) are orientated towards the support platform (12) radially to the axis (A) in axial projection and are arranged so as to be inclined with respect to the bearing plane (16) in such manner that when the clamping module (5.2) is in the joined state both a radially acting retaining force fixing the clamping module (5.2) axially and an axially acting tensile force pulling the clamping module (5.2) towards the first component (1) are effective between the friction elements (10) and the tube inner wall (1i).

7. The welding assembly according to claim 6,
**characterised in that** the guide rails (21) are each inclined at a angle α relative to the bearing plane, wherein 0° < α ≤ 10°.

8. The welding assembly according to any one of claims 5 to 7,
**characterised in that** the common actuator unit is a linear actuator having an effective actuation direction orientated along the axis (A) and along which a bidirectionally displaceable final control element (24) is provided, which is in operative connection with the coupling links (23) of the friction element assemblies (20).

9. The welding assembly according to claims 6 and 8,
**characterised in that** a mechanical energy storage unit (30) is in operative connection with the linear actuator along the effective actuator direction, and is able to exert at least a force in support of the axially acting tensile force pulling the clamping module (5.2) axially towards the first component (1).

10. The welding assembly according to claim 8 or 9,
**characterised in that** the linear actuator has a drive motor (26) which is in operative connection with the support platform (12) via the mechanical energy storage unit (30), and
the drive motor (26) is connected to a spindle (25) orientated along axis (A) that is in engagement with a spindle nut (24), which is connected to the coupling links (23) of the at least three friction element assemblies (20).

11. The welding assembly according to claim 10,
**characterised in that** die mechanical energy storage unit (30) is a spring assembly which is arranged between the drive motor (26) and the support platform (12), and
the drive motor (26) is mounted so as to be axially movable relative to the support platform (12), so that when the clamping module (5.2) is in the joined state the spring assembly (30) exerts a tensioning force in the direction of the actuator operative direction.

12. The welding assembly according to any one of claims 2 to 11,
**characterised in that** a frame structure protruding axially beyond the clamping module (5.2) is arranged on the support platform (12), and at least three guide rollers (11) are attached to the end of the frame structure opposite the support platform (12), which rollers support the reliable introduction of the clamping module (5.2) into the first tubular component (1).

13. The welding assembly according to any one of claims 2 to 12,
**characterised in that** the carrier ring module (5.1) has at least one carrier ring (34.2) which is connected to the support platform (12) and is non-rotatable about the axis (A), and on the ring inner side of which an inner ring (31) which is provided so as to be rotatable relative to the carrier ring (34.2) and is in direct or indirect engagement with the servomotor (32) provided fixedly on the carrier ring (34.2).

14. The welding assembly according to any one of claims 1 to 13,
**characterised in that** the at least one linear frame (8) is attached radially outwardly to the carrier ring module (5.1) and is rotatable together with the carrier ring module about the tube longitudinal axis (1R).

15. The welding assembly according to any one of claims 1 to 14,
**characterised in that** a sensor unit (54) is provided on the freely positionable manipulator end of the manipulator unit (7) for contactless detection of the shape and/or size of an intermediate space or groove-like recess along the intersection curve which is to be filled by welding.

16. The welding assembly according to any one of claims 1 to 15,
**characterised in that** the supply module constructed separately from the welding assembly is connected to the separate support structure in articulated manner via a suspension system in such manner that both a vertical and horizontal positioning as well as rotation of the supply module about the vertical axis are possible.

17. The welding assembly according to any one of claims 1 to 16,
**characterised in that** a slip ring coupling is provided on the supply module constructed separately from the welding assembly to assure the supply of energy, and an external cable feed is coupled thereto.

18. The welding assembly according to claim 17,
**characterised in that** a fluid-tight slip ring coupling is provided on the supply module constructed separately from the welding assembly, and an external process gas feed is coupled thereto.

## Revendications

1. Ensemble de soudage servant à assembler de manière durable un premier élément de forme tubulaire (1) à un deuxième élément (2) le long d'une courbe de recoupement (3) bi- ou tridimensionnelle, le long de laquelle les deux éléments (1,2) sont en contact, comprenant un ensemble de fixation (5) destiné à être assemblé de manière solidaire et amovible sur une extrémité, de forme tubulaire, opposée à la courbe de recoupement (3), du premier élément, une unité de manipulation (7) montée de manière à pouvoir pivoter indirectement ou directement sur l'ensemble de fixation (5) autour d'un axe longitudinal de tube (1R) associé au premier élément (1), laquelle unité de manipulation comprend une extrémité de manipulation à positionnement libre, et un outil de soudage (6) installé sur l'extrémité de manipulation à positionnement libre,
dans lequel l'ensemble de fixation (5) comprend un module de serrage (5.2) pouvant être inséré au moins partiellement axialement côté frontal dans l'extrémité de forme tubulaire du premier élément (1), lequel module de serrage est conçu pour un assemblage solidaire et amovible sur une paroi intérieure du tube (1i) associée au premier élément de forme tubulaire, ainsi qu'un module de bague de support (5.1) installé de manière rotative sur le module de serrage (5.2), lequel module de bague de support dépasse axialement, à l'état assemblé du module de serrage (5.2), de l'extrémité de forme tubulaire du premier élément (1) et est en liaison fonctionnelle avec un servomoteur (32) servant à l'entraînement en rotation du module de bague de support (5.1) autour de l'axe longitudinal de tube (1R), de telle manière que le module de bague de support (5.1) soit monté de manière rotative sans fin autour de l'axe longitudinal de tube (1R), et
dans lequel au moins un mécanisme porteur linéaire (8) est installé sur le module de bague de support (5.1) et est monté de manière à pouvoir être dévié, au moyen d'un actionneur (38), dans deux directions parallèlement à l'axe longitudinal de tube (1R), dans lequel l'unité de manipulation (7) est une chaîne cinématique ouverte à 6 axes se présentant sous la forme d'un robot à bras articulé vertical et est installée sur une extrémité du mécanisme porteur (8),
en ce qu'il est prévu un module d'alimentation (43) sur lequel est installé au moins l'un des composants suivants :
une unité de commande (46.1, 46.2), une unité d'alimentation en énergie électrique, au moins un réservoir (47.1, 47.2) pour des matériaux requis pour le processus de soudage, comprenant le fil de soudage et le gaz de processus,
en ce que ledit au moins un composant est relié à l'outil de soudage (6) par l'intermédiaire d'une ligne de raccordement (51),
en ce que le module d'alimentation (43) est monté de manière à pouvoir tourner afin d'exercer un mouvement de rotation simultané avec le déplacement de l'outil de soudage (6) autour de l'axe longitudinal de tube, lequel mouvement de rotation permet des rotations sans fin de l'outil de soudage (6) autour de l'axe longitudinal de tube,
**caractérisé en ce que** le module d'alimentation (43) est articulé de manière à pouvoir être positionné librement au moins le long d'un plan sur une structure de support (44) réalisée séparément de l'ensemble de soudage.

2. Ensemble de soudage selon la revendication 1, **caractérisé en ce que** le module de serrage (5.2) comporte une plate-forme de support (12) pour un contact indirect ou direct avec l'extrémité de forme tubulaire, axialement côté frontal, du premier élément (1), le long d'un plan de contact (16) associé à la plate-forme de support (12).

3. Ensemble de soudage selon la revendication 2, **caractérisé en ce qu'**au moins trois ensembles d'éléments de frottement (20) sont disposés indirectement ou directement sur la plate-forme de support (12), lesquels ensembles d'éléments de frottement sont respectivement disposés au moins de manière mobile radialement par rapport à un axe (A) qui est orienté perpendiculairement au plan de contact (16) et qui, à l'état assemblé du module de serrage (5.2), coïncide avec l'axe longitudinal de tube (1R) du premier élément (1), et sont disposés de manière uniformément répartie autour dudit axe (A) et peuvent être amenés à passer, au moyen d'actionneurs, d'une première position, à laquelle les ensembles d'éléments de frottement (20) présentent respectivement une première distance radiale par rapport à l'axe (A), à une seconde position à laquelle les ensembles d'éléments de frottement (20) présentent respectivement une seconde distance par rapport à l'axe (A), qui est supérieure à la première distance, de manière à ce que les ensembles d'éléments de frottement (20) forment respectivement un assemblage par complémentarité de force et de frottement à la paroi interne de tube (1i).

4. Ensemble de soudage selon la revendication 2 ou 3, **caractérisé en ce que** la plate-forme de support (12) présente une face inférieure qui peut être tournée vers le premier élément (1) et sur laquelle sont disposés de manière uniformément répartie autour de l'axe (A) au moins trois éléments de support (14) qui présentent respectivement une extension radiale le long de laquelle est fixé au moins par sections un élément électriquement isolant (15) et
**en ce que** les éléments électriquement isolants (15) associés auxdits au moins trois éléments de support (14) sont situés dans le plan de contact (16).

5. Ensemble de soudage selon la revendication 3 ou 4, **caractérisé en ce que** lesdits au moins trois ensembles d'éléments de frottement (20) présentent respectivement un rail de guidage linéaire (21) installé indirectement ou directement sur la plate-forme de support (12), rail de guidage le long duquel un chariot (22) muni d'un élément de frottement (10) pouvant s'engager sur la paroi intérieure de tube (1i) est monté de manière à pouvoir être dévié dans deux directions et
**en ce que** les chariots (22) desdits au moins trois ensembles d'éléments de frottement (20) sont respectivement en liaison fonctionnelle par l'intermédiaire d'un organe de couplage (23) avec une unité d'actionnement commune qui repose sur la plate-forme de support (12).

6. Ensemble de soudage selon la revendication 5, **caractérisé en ce que** les rails de guidage (21) des ensembles d'éléments de frottement (20) sont orientés radialement par rapport à l'axe (A) en saillie axiale sur la plate-forme de support (12) et sont disposés inclinés par rapport au plan de contact (16) de telle manière que dans l'état installé du module de serrage (5.2), entre les éléments de frottement (10) et la paroi de tube intérieure (li), il se produise une force de retenue agissant radialement et fixant le module de serrage (5.2) de manière solidaire axialement et une force de traction agissant axialement et exerçant une traction axiale sur le module de serrage (5.2) axialement dans la direction du premier élément (1).

7. Ensemble de soudage selon la revendication 6, **caractérisé en ce que** les rails de guidage (21) sont inclinés d'un angle α par rapport au plan de contact, avec 0° < α ≤ 10°.

8. Ensemble de soudage selon l'une des revendications 5 à 7, **caractérisé en ce que** l'unité d'actionnement commune est un actionneur linéaire présentant une direction de fonctionnement de l'actionneur qui est orientée le long de l'axe (A) et le long de laquelle est prévu un organe de réglage (24) qui peut être dévié dans deux directions et qui est en liaison fonctionnelle avec les organes de couplage (23) des ensembles d'éléments de frottement (20).

9. Ensemble de soudage selon les revendications 6 et 8, **caractérisé en ce qu'**une unité d'accumulation d'énergie mécanique (30) est en relation fonctionnelle avec l'actionneur linéaire dans la direction de fonctionnement de l'actionneur et est capable de développer au moins une force qui résiste à la force de traction agissant axialement et exerçant une traction axiale sur le module de serrage (5.2) dans la direction du premier élément (1).

10. Ensemble de soudage selon 8 ou 9, **caractérisé en ce que** l'actionneur linéaire comporte un moteur d'entraînement (26) qui est en liaison fonctionnelle avec la plate-forme de support (12) par l'intermédiaire de l'unité d'accumulation d'énergie mécanique (30) et
**en ce que** le moteur d'entraînement (26) est relié à une broche (25) orientée le long de l'axe (A) qui s'engage sur un écrou de broche (24) relié aux organes de couplage (23) desdits au moins trois ensembles d'éléments de frottement (20).

11. Ensemble de soudage selon la revendication 10, **caractérisé en ce que** l'unité d'accumulation d'énergie mécanique (30) est un dispositif à ressort disposé entre le moteur d'entraînement (26) et la plate-forme support (12) et
**en ce que** le moteur d'entraînement (26) est installé de manière mobile axialement par rapport à la plate-forme de support (12), de sorte qu'à l'état assemblé du module de serrage (5.2), l'ensemble à ressort (30) déploie une force de tension orientée dans la direction de fonctionnement de l'actionneur.

12. Ensemble de soudage selon l'une des revendications 2 à 11, **caractérisé en ce qu'**une structure formant mécanisme porteur dépassant axialement du module de serrage (5.2) est disposée sur la plate-forme de support (12), à l'extrémité de laquelle structure de mécanisme porteur, qui est opposée à la plate-forme de support (12), sont installés au moins trois rouleaux de guidage (11) qui permettent une insertion sécurisée du module de serrage (5.2) dans le premier élément de forme tubulaire (1).

13. Ensemble de soudage selon l'une des revendications 2 à 12, **caractérisé en ce que** le module de bague de support (5.1) présente au moins une bague de support (34.2) qui est reliée à la plate-forme de support (12) de manière solidaire en rotation autour de l'axe (A) et sur la face intérieure de laquelle est prévue une bague intérieure (31) montée de manière rotative par rapport à la bague de support (34.2), laquelle bague intérieure s'engage indirectement ou directement sur le servomoteur (32) prévu de manière solidaire sur la bague de support (34.2).

14. Ensemble de soudage selon l'une des revendications 1 à 13, **caractérisé en ce que** ledit au moins un mécanisme porteur linéaire (8) est installé radialement à l'extérieur sur le module de bague de support (5.1) et de manière à pouvoir tourner en commun avec celui-ci autour de l'axe longitudinal de tube (1R).

15. Ensemble de soudage selon l'une des revendications 1 à 14, **caractérisé en ce qu'**il est prévu, à l'extrémité de manipulation à positionnement libre de l'unité de manipulation (7), une unité de détection (54) destinée à détecter sans contact la forme et/ou les dimensions d'un espace intermédiaire présent le long de la courbe de recoupement ou d'un évidement en forme de rainure qui doit être rempli aux fins de la soudure.

16. Ensemble de soudage selon l'une des revendications 1 à 15, **caractérisé en ce que** le module d'alimentation séparé de l'ensemble de soudage est articulé par l'intermédiaire d'un dispositif de suspension sur la structure de support séparée de telle manière qu'un positionnement vertical et horizontal ainsi qu'une rotation du module d'alimentation autour de l'axe vertical soient possibles.

17. Ensemble de soudage selon l'une des revendications 1 à 16, **caractérisé en ce qu'**il est prévu, pour l'alimentation en énergie, sur le module d'alimentation, séparément de l'ensemble de soudage, un couplage par bague collectrice auquel est couplé une amenée de câble.

18. Ensemble de soudage selon la revendication 17, **caractérisé en ce qu'**il est prévu sur le module d'alimentation, séparément de l'ensemble de soudage, un couplage par bague collectrice étanche aux fluides auquel est couplée une amenée de gaz de soudage externe.
